Europäisches Patentamt

European Patent Office

Office européen des brevets

(11) Publication number: **0 552 537 A1**

# EUROPEAN PATENT APPLICATION

(21) Application number: **92310437.6**

(22) Date of filing: **16.11.92**

(51) Int. Cl.5: **B60G 21/055**

(30) Priority: **22.01.92 US 823997**

(43) Date of publication of application:
**28.07.93 Bulletin 93/30**

(84) Designated Contracting States:
**AT BE CH DE DK ES FR GB GR IT LI LU NL SE**

(71) Applicant: **BENTELER INDUSTRIES, INC.**
**320 Hall Street SW**
**Grand Rapids, Michigan 49507(US)**

(72) Inventor: **Alatalo, Clark E.**
**6620 Ormada Drive**
**Kalamazoo, Michigan 49004(US)**
Inventor: **Floyd, James L.**
**17867 14B Road**
**Culver, Indiana 46511(US)**
Inventor: **Wells, Gary L.**
**6900 North 41st Street**
**Augusta, Michigan 49012(US)**
Inventor: **Alberda, James A.**
**4220 Blue Lagoon**
**Shelbyville, Michigan 49344(US)**

(74) Representative: **Hale, Peter et al**
**Kilburn & Strode 30 John Street**
**London WC1N 2DD (GB)**

(54) **Twist beam axle.**

(57) The specification discloses a vehicle twist beam axle subassembly incorporating a twist beam axle of generally V-shaped cross section formed of two legs which diverge away from the integral bight thereof, the ends of the legs being curled back into elongated generally circular loops weldably bonded to the legs, and the loops having flattened portions to be tuned to a predetermined torsional resistance.

FIG. 2

This invention relates to vehicle axles and axle subassemblies, and particularly to trail arm twist beam axles and axle subassemblies.

A trail arm twist beam axle is intended to semi-isolate one wheel of a vehicle such as an automobile from the opposite wheel. Connection points are made to the body mounts, wheel spindles, shock absorbers and springs, as well as to track bars for lateral stability. Individual component pieces typically making up an axle assembly include the twist beam, trail arms, flanges, spring supports, jounce bumpers, shock mounts, bushing mounts and torsion bar.

Various cross sectional configurations have been suggested for twist beam and torsion bar elements heretofore, although typically a twist beam comprises an inverted, U-shaped beam for bending loads, coupled with a separate solid torsion rod of different material and characteristics from those of the beam, and extending through the open central portion of the beam, for accommodating torsional loads. The U-shaped beam is normally a drawn or stamped member which is not strong in torsion. Both ends are attached to stubs extending in from the spring seats. The separate rod to control torsional loads is specially fabricated of a high strength steel. Its ends are attached separately from, and in a special relationship relative to, the ends of the beam. The material costs, manufacturing costs and assembly costs of the two-piece twist beam and torsion bar arrangement are significant.

The present invention is defined in the accompanying claims to which reference is now made.

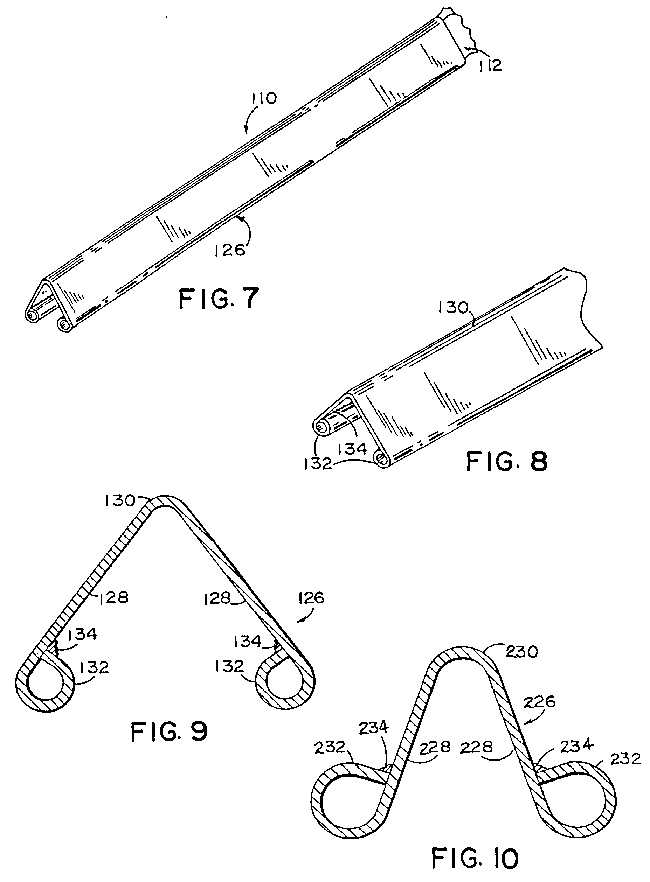

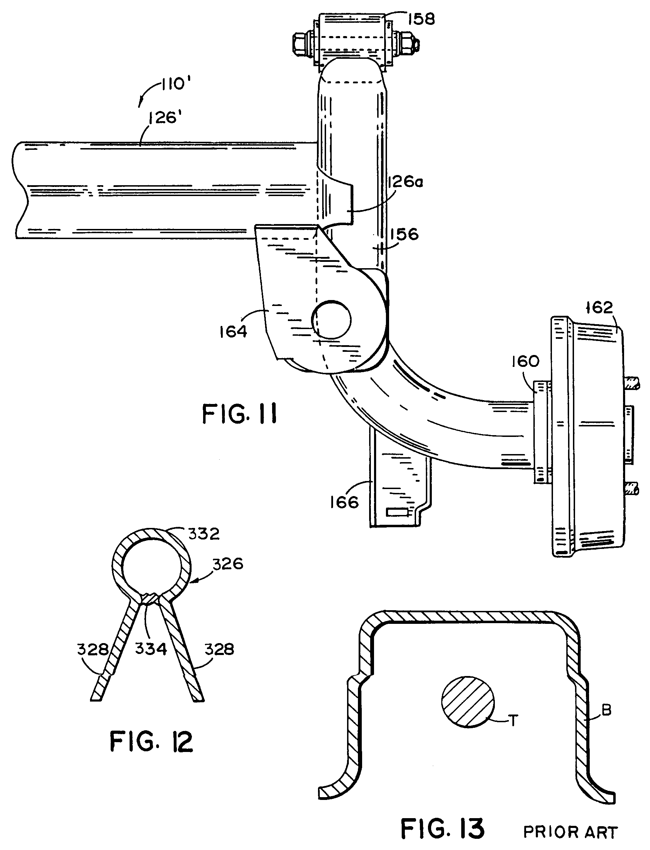

The present invention involves a specially configured one-piece, one material, twist beam axle capable of handling both bending loads and torsional loads. The novel beam has integral components preferably formed of a generally V-shaped beam portion, having a pair of legs divergent relative to each other from an integral apex, a portion of the legs being curled into a generally circular loop and welded, forming an integral one-piece, multiportion twist beam axle. No separate torsion bar is provided or necessary. The integral, one piece, one material twist beam axle is "tuned" to match the needed torsion resistance for the particular style and weight vehicle. One preferred embodiment depicted illustrates a trail arm axle subassembly wherein the one piece load and torsion beam is tuned by having flattened portions of outwardly curled loops which lie against the legs. These are illustrated at the ends of the beam and extend inwardly from the junctures thereof with the trail arms. Tuning of the twist beam is preferably achieved by having portions of the leg loops flattened at the ends where they are welded to the trail arms. Further, tuning to a particular ride/handling characteristic can be achieved by variance in the length and location of the flattened portions, length of weld of the loops to the beam legs, the number of loops, loop diameter, and leg and loop thickness. Another embodiment depicted (Figs. 7-9) has the distal ends of both legs curled back inwardly on the legs and welded. Another depicted embodiment (Fig. 10) has the distal ends of both legs curled back outwardly to the edge abutted with the beam legs and welded. Another embodiment depicted (Fig. 12) has a loop intermediate the legs and welded closed at the inner ends of the legs.

The invention makes it possible to produce one-piece twist beam axles which are considerably less expensive in material, forming and assembly costs than the prior structure requiring a torsion bar, yet which function remarkably well and are tunable to the installation. Assembly requires attachment of both ends of just this one member rather than two specially arranged components of different materials. The invention thus provides controllable torsional stiffness and beam strength while reducing mass and cost.

The invention may be carried into practice in various ways but several constructions of twist beam axles and subassemblies incorporating them, all constructed in accordance with the present invention, together with an example of the prior art will now be described by way of example with reference to the accompanying drawings, in which:

Fig. 1 is a perspective view of a vehicle trail arm and axle subassembly incorporating a tuned load and torsion beam;

Fig. 2 is an isometric view of the tuned load and torsion beam in Fig. 1;

Fig. 3 is an end view of the tuned load and torsion beam in Fig. 2;

Fig. 4 is a sectional view taken on plane IV-IV of Fig. 3;

Fig. 5 is a sectional view taken on plane V-V of Fig. 3;

Fig. 6 is an elevational view of the tuned load and torsion beam in Fig. 2;

Fig. 7 is a fragmentary isometric view of a portion of a head swing arm vehicular axle subassembly incorporating another embodiment;

Fig. 8 is an enlarged isometric view of the left end of the twist beam axle of the subassembly in Fig. 7;

Fig. 9 is a further enlarged cross sectional view of the twist beam axle in Fig. 7;

Fig. 10 is a cross sectional view of another twist beam axle;

Fig. 11 is a plan view of a different trail arm axle subassembly;

Fig. 12 is a cross sectional view of the torsion beam of a further twist beam axle;

Fig. 13 is a cross sectional view of the prior art beam and torsion bar components; and

Fig. 14 illustrates the formulae used in the text.

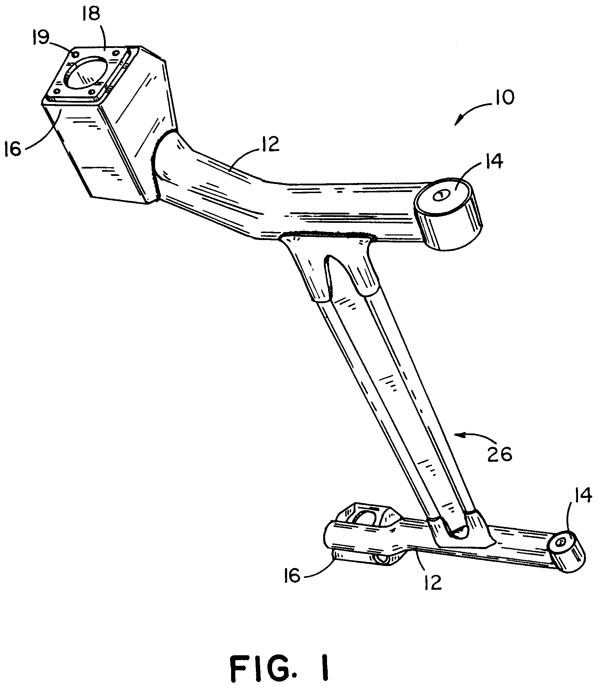

Referring now specifically to the drawings, the twist beam axle subassembly 10 depicted in Fig. 1 includes a pair of similar, laterally spaced, mirror image trail arms 12, each having a pivotal mount bushing 14 at the front end thereof for attachment to a vehicle frame, and a wheel mount 16 at the rear end of the arms. These wheel mounts extend laterally in opposite directions, i.e., outwardly relative to the vehicle frame, and have a conventional wheel mounting surface 18 shown as a flat plate having orifices 19 therein for bolting the wheel in position. Each wheel should have a certain amount of independence from that opposite it. This is normally achieved by having a twist beam of one type of material, and an elongated torsion bar of another type of material (Fig. 13), as noted above. The trailing arm subassembly will also include spring pockets and shock mounts.

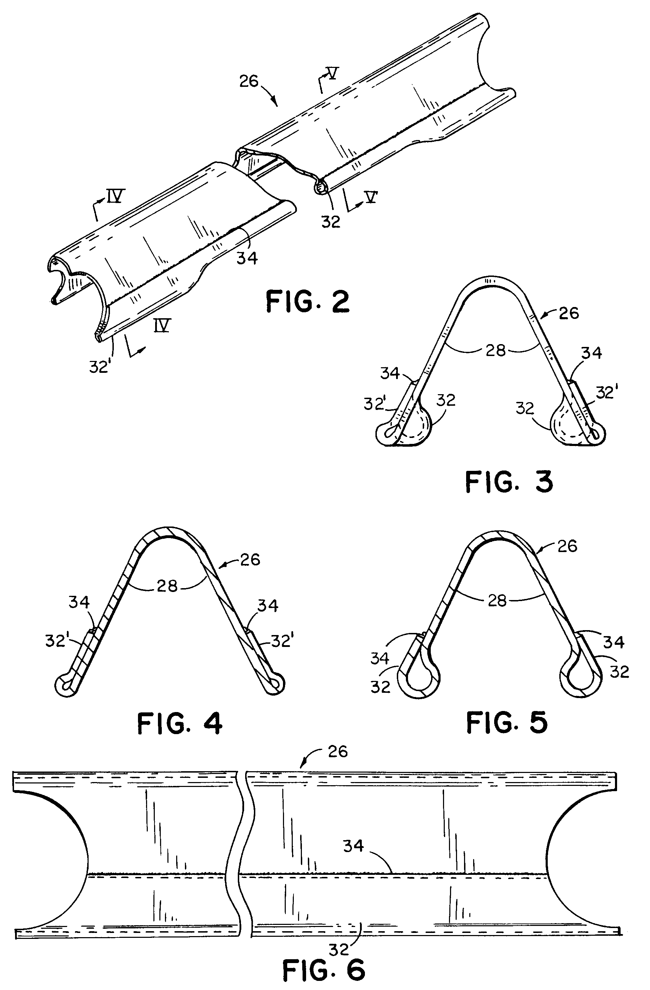

Mounted to both of the trail arms is the novel twist beam axle 26, which by its unique construction serves both functions of providing beam strength and torsional resistance, of a controlled amount to suit the particular handling and ride characteristics for the particular vehicle, i.e., to suit the particular vehicle construction and weight. Twist beam axle 26 is "tuned" in the manner described hereinafter, to achieve a predetermined controlled torsion resistance characteristic for the particular vehicle. The axle has an elongate structure along an elongate axis, including a pair of elongate legs extending transversely to the noted axis and here shown to be in an inverted generally "V" construction (Figs. 2-5) with the apex of the crosssection configuration being slightly rounded. The outer distal ends of these legs 28 are specially formed by being curled back upon themselves to form closed loops 32. The looped outer ends engage the legs 28 by lying flat and parallel thereagainst (in the first embodiment), with the outer edge being welded to the legs by a fillet weld zone 34. This parallel engagement enables the loops to be flattened without undue stress on the weld zone. The beam can be made of plain carbon steel or high strength, low allow steel.

Controlled portions of these loops are then flattened as at 32'. This flattened zone preferably includes the areas at the ends of the twist beam axle where it is to be welded to the trail arms. Control of the linear amount of the loops which is flattened enables variation of the torsional resistance. The more area that is flattened, the less the torsional resistance, so that the characteristic beam can be closely tailored, i.e., "tuned" to the particular vehicle to be accommodated. It has also been determined that flattening at the location of the weld to the trail arms considerably lessens the stress at the weld joints, giving further assurance against failure at this location of maximum stress. This controlled amount of flattening can be achieved using a conventional press, pressing rolls, or other equivalents. The novel axle can, for example, be made by roll forming flat steel stock, i.e., unwound from a coil, to create the tubular or loop portions at the distal ends of the legs, welding the edges to the legs to form the closed loop solid structure, cutting the formed stock into sections of desired length, flattening designated portions of the loops before or after cutting, and bending the generally flat stock on a press brake or the equivalent to form the V-shape configuration. The ends of the beam are also preferably scalloped as shown in Figs. 2-6 to a concave configuration matching the convex configuration of the exterior surface of the trail arms.

Additional torsional tuning of the axle may also be assisted by the length and amount of weld zone 34 between the loops and the legs 28 upon which they are curled and engage. These weld zones can be at spaced intervals, over the whole length, on one leg, on both legs, or other variations to achieve a desired torsional resistance.

Additional tuning can also be achieved by variation of the thickness of the beam legs, and diameter of loops 32. Therefore, by minor variations in the production techniques, the manufacturer can readily accommodate a wide variety of vehicle characteristics.

The cost of construction of this one piece twist beam axle is markedly less than the prior art construction presently used.

Extensive testing of the novel construction of Fig. 1-6 has demonstrated its effectiveness, in spite of its ultimate simplicity. The axle can be readily formed from a flat elongate piece of steel stock, using forming rollers and/or a brake press, or other known forming equipment. The elimination of the special torsion rod significantly lowers the cost of construction, cost of materials, cost of separate mounting means on the ends, and assembly costs. Furthermore, production of a wide variety of unit characteristics with desired load and handling can be made using the same equipment and like starting material. The variations can be achieved quickly and easily during fabrication.

In Figs. 7-12 are shown other embodiments. These less preferred embodiments are not shown to have flattened loop portions. The vehicular axle subassembly 110 depicted in Fig. 7 is for one side of the vehicle, the opposite side being a mirror image thereof. In this subassembly, the numeral 112 indicates conventional wheel components of a trailing arm subassembly including spring pockets and a trailing arm of conventional type having a stub axle extending laterally from its mounting flange to mount a wheel. Identical components to these are on the opposite side of the vehicle in mirror image thereto. These components on opposite sides are interconnected to and by the novel twist beam axle 126 attached by welding. These added components are assembled in conventional fashion and therefore are not described in detail herein.

Twist beam axle 126 in Figs. 7, 8 and 9 is an integral, elongate unit formed of a pair of legs 128 in generally V-shaped configuration in cross section, integrally joined at the apex 130 (Fig. 9). The outward distal ends of legs 128 are curled back inwardly upon themselves, with the distal edges in direct abutment with the legs, to form elongate, generally cylindrical loops 132 generally circular in cross section, i.e., these ends curl inwardly toward each other as shown. The curled back ends are welded by fillet weld zones 134 to legs 128, to cause the loops to be peripherally closed. This integral unit can be made of plain carbon steel, or high strength low alloy steel. The novel structure effects unique beam strength and torsional resistance, while still being of less mass and lower cost than the prior art structure.

The typical prior art structure, as shown in Fig. 13, includes a generally U-shaped, stamped beam B in combination with a separate elongate solid torsion bar T made of special material. The ends of beam B are attached to the supports, while the ends of torsion bar T are separately attached to the vehicle supports. The use of these separate components causes this prior art subassembly to be more expensive and have greater mass than the inventive apparatus.

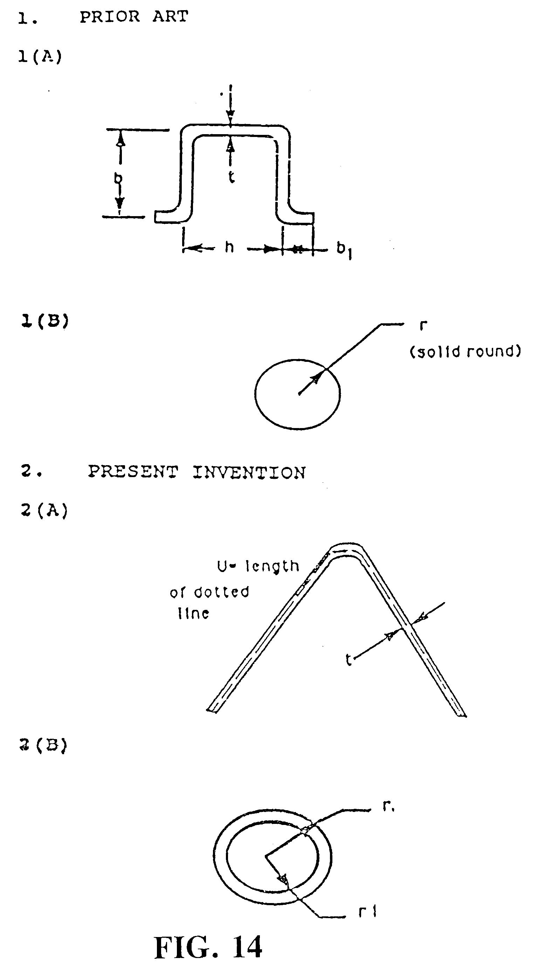

The greater torsional stiffness and beam strength with a reduced mass and cost can be at least partially explained with comparative calculations. This potential for improved capabilities in example structures comparing the first embodiment to the prior art can be expressed mathematically as follows and with reference to Figure 14, where K equals torsional stiffness constant and A equals area in square millimetres, with the other dimensions being in millimetres:

1(A)

$$k = \frac{t^3}{3}\,(h + 2b + 2b_1)$$

$$t = 3.0$$
$$h = 66.0$$
$$b = 52.0$$
$$b_1 = 10.0$$
$$k = 1710 \text{ mm}^4$$
$$A = 570 \text{ mm}^2$$

1(B)

$$K = \frac{1}{2}\,\pi\,r^4$$

$$t = 3.0$$
$$r = 8.0$$
$$K = 6434 \text{ mm}^4$$
$$A = 201 \text{ mm}^2$$

2(A)

$$K = \frac{1}{3}\,U\,t^3$$
$$t = 3.0$$
$$U = 130$$
$$K = 1170 \text{ mm}^4$$
$$A = 390 \text{ mm}^2$$

4

2(B)

$$K = \frac{1}{2} \pi (r_o^4 - r_i^4)$$
$$r_o = 8.5$$
$$r_i = 5.5$$
$$K = 6762 \text{ mm}^4$$
$$A = 132 \text{ mm}^2$$

Combining 1(A) and 1(B) (PRIOR ART) = K = 8144
                                        A =  771

Combining 2(A) Twice 2(B) (PRESENT INVENTION) = K = 14694
                                                A =  654

Hence, for a smaller total area, the novel axle of the first embodiment provides greatly improved torsional stiffness capacity.

In Fig. 11 is depicted an axle subassembly 110' employing the twist beam of the second embodiment in combination with a conventional tubular trailing arm unit. Specifically, the beam 126' has the same cross sectional configuration as in Fig. 8 but a modified end flange 126a of arcuate shape to follow the outer surface of tubular trailing arm 156. This arm has a bushing mount 158 on the forward end, for attachment to the vehicle frame (not shown). The other, rear, end of the arm 156 curves outwardly through a 90° turn to extend laterally. An outer flange 160 on the arm mounts wheel drum 162 . To the rear of beam 126' is a spring seat 164, and to the rear of that is a shock bracket 166. Hence, vertical movement of the wheel (not shown) on drum 162 is against the bias of the spring, damped by the shock absorber, the trailing arm pivoting about mount 158. This movement in one arm causes twisting of beam 126'.

Alternatively to the above described embodiment of the twist beam, the lower distal ends of legs can be made to curl outwardly relative to the V-shaped configuration and abut the legs with edge abutment, as depicted on alternative beam cross section 226 in Fig. 10. Specifically, this unit 226 has a pair of legs 228 which extend divergently away from each other relative to integral apex 230, the outer distal ends of legs 228 curling outwardly back upon themselves to form tubular portions 232 which are generally circular loops in cross section, welded at fillet weld zones 234 at the intersection to close the periphery thereof. The method of forming this structure could be comparable to that set forth for the prior embodiment, except that the bending action is in the opposite direction. Conceivably, alternative constructions of these embodiments, but having only one loop, could be employed.

As to the orientation of the space between the legs of the generally V-shaped twist beam axle in the final subassembly, such space is preferably downwardly oriented. Alternatively, it could be forwardly or rearwardly oriented. It is normally not desired to have this space directly upwardly oriented, since it would tend to catch debris, moisture, etc. which could cause deleterious effects upon the beam.

In Fig. 12 is depicted the cross section of an elongate twist beam 326 wherein a cylindrically shaped portion or loop 332 is intermediate, i.e. at the apex of, and integral with divergent legs 328. The loop 332 thus extends between the inner ends of legs 328. Weld 334 between these inner ends bonds the legs together and also completes loop 332 to peripherally close it. One or both of the distal ends of beam 326 could also be provided with loops.

Those skilled in the art will readily understand the inventive concept and construction from the above description. It may be desirable in certain types of vehicles to make minor changes to accommodate the situation. Such minor changes are deemed to be part of this invention which is not intended to be limited by the preferred embodiments disclosed as illustrative, but only by the scope of the appended claims and the equivalent structures to those defined therein.

**Claims**

1. A twist beam axle (26, 126, 226, 326) capable of accommodating both bending and torsional loads, comprising: a unitary member which is elongate in one direction, the member defining, in lateral cross section, a pair of legs (28, 128, 228, 326) extending divergently away from each other transverse to the said one direction to outer distal ends, at least one leg having at least one generally cylindrical portion which is formed from a portion of the at least one leg, which portion is looped back upon itself into a peripherally closed loop (32, 132, 232, 332); and a pair of mounting ends (126') for attachment to vehicle suspension trailing arms (12).

2. An axle as claimed in claim 1, wherein the cylindrical portion is peripherally closed by weldment (34, 134, 234, 334).

3. An axle as claimed in any of claims 1 to 3 in which the body has a generally V-shaped cross-section.

4. An axle as claimed in claim 1, 2 or 3, wherein the at least one generally cylindrical portion is at the said distal end of at least one of the legs.

5. An axle as claimed in any of claims 1 to 4, including two generally cylindrical portions, each at a distal end of a respective leg.

6. An axle as claimed in any of claims 1 to 5, wherein the at least one cylindrical portion has a flattened portion (32') in at least one location along its length to tune the torsional resistance of the axle to a predetermined value.

7. An axle as claimed in claim 6, wherein the loops are flattened in selected areas between the mounting ends to tune the torsion resistance of the axle to a predetermined value.

8. An axle as claimed in claim 6 or 7 , wherein the cylindrical portion is flattened at each mounting end which is welded to its respective trailing arm.

9. An axle as claimed in claim 8, wherein the mounting ends (126') are scalloped to the exterior configuration of the trail arms; whereby the stresses at the welded junctures of the mounting ends with the trail arms is minimised.

10. An axle as claimed in any preceding claim in which the or each cylindrical portion (132) curls outwardly from its respective leg.

11. An axle as claimed in any of claims 1 to 9 in which the or each cylindrical portion (32, 132) curls inwardly from its respective leg.

12. An axle as claimed in claim 1, 2 or 3, wherein the legs define an apex of the beam therebetween, the generally cylindrical portion (332) including the apex.

13. An axle as claimed in claim 12, wherein the legs have inner ends adjacent and integrally joined to the generally cylindrical portion, the weldment (334) being between the inner ends.

14. An axle as claimed in any of claims 1 to 13, wherein the or each cylindrical portion is closed along substantially the entire length thereof to the elongate legs.

15. An axle as claimed in any of claims 1 to 14 in which the or each cylindrical portion is closed by weldment at predetermined locations to create a torsional resistance to be of a predetermined value.

16. An axle as claimed in any preceding claim in which the lateral cross section of the or each cylindrical portion is generally circular.

**17.** A vehicle trail arm suspension subassembly comprising :

a pair of trail arms (12) each having a pivot mount (14) on one end thereof for pivoted attachment to a vehicle frame, and a wheel mount (16) spaced from the pivot mount;

a tuned, torsion-bar-free, unitary twist beam axle (26, 126, 226, 326) as claimed in any preceding claim between the pair of trail arms, having ends welded to the pair of trail arms.

**18.** A vehicle subassembly as claimed in claim 17 in combination with suspension means at the ends of the twist beam axle, the said axle being oriented such that the distal ends of the legs are below their common junction.

**19.** A method of forming a torsion-bar-free unitary twist beam axle (26, 126, 226, 326) having a predetermined, tuned torsion resistance, comprising the steps of :

providing an elongate steel body having a pair of elongate laterally opposite distal edges and an elongate centre area;

forming an elongate, integral, loop (32, 132, 232, 332) along at least one of the distal edges substantially the length of the body, and causing a distal edge to lie alongside the body;

bending the body about the centre area to form a three-dimensional configuration;

welding the distal edge to the body before or after the step of forming the body into a three dimensional configuration; and

flattening predetermined portions of the loop before or after the bending step to tune the axle to a predetermined torsional resistance.

**20.** A method as claimed in claim 19, wherein each of the edges is formed into a loop (32, 132, 232).

**21.** A method as claimed in claim 20, wherein both of the loops have edges lying alongside the body, and both the loop edges are welded to the body.

**22.** A method as claimed in claim 21, wherein the loop edges are welded to the body at predetermined locations to tune the torsional resistance of the axle to a predetermined value.

**23.** A method as claimed in any of claims 19 to 22 in which the body is bent about the centre area to form a generally V-shaped configuration in lateral cross section.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13    PRIOR ART

1.   PRIOR ART

1(A)

1(B)

r
(solid round)

2.   PRESENT INVENTION

2(A)

U= length
of dotted
line

t

2(B)

r.

r l

# FIG. 14

European Patent
Office

**EUROPEAN SEARCH REPORT**

Application Number

EP    92 31 0437

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 229 576 (VALLOUREC) | 1,3-6, 14,16,17 | B60G21/055 |
| A | * column 2, line 1 - column 3, line 16; figures 1,4 * | 19-22 | |
| Y | DE-A-3 200 776 (FIAT AUTO)  * figures 1-5 * | 1,3-6, 14,16,17 | |
| Y | EP-A-0 249 537 (PEUGEOT, CITROEN)  * the whole document * | 1,3-6, 14,16,17 | |
| Y | FR-A-2 658 128 (BENTERER)  * abstract; figures 1,3 * | 1,3-6, 14,16,17 | |
| A | GB-A-452 173 (MICHELIN) * figures 4,5,7,8,20,21 * | 1 | |
| A | FR-A-2 591 155 (ZAPOROZHSKY AUTOMOBILNY ZAVOD KOMMUNAR) * figures 4,5 * | 1 | TECHNICAL FIELDS SEARCHED (Int. Cl.5 ) |
| A | FR-A-2 618 733 (PEUGEOT, CITROEN) | | B60G |
| A | AUTOMOTIVE ENGINEERING vol. 90, no. 8, August 1982, pages 71 - 78 'REAR AXLE DESIGNED IN ORIENTED FRP' * figures 8,12,13 * | | |
| A | US-A-4 623 164 (BKS CO.) | | |

The present search report has been drawn up for all claims

| Place of search | Date of completion of the search | Examiner |
|---|---|---|
| THE HAGUE | 27 APRIL 1993 | TSITSILONIS  L. |

EPO FORM 1503 03.82 (P0401)